# EUROPÄISCHE PATENTSCHRIFT

(11) **EP 3 715 648 B1**
(45) Veröffentlichungstag und Bekanntmachung des Hinweises auf die Patenterteilung: **07.06.2023**
(21) Anmeldenummer: 20160301.6
(22) Anmeldetag: 02.03.2020
(51) Int. Cl.: F16B 31/02, F16B 37/14, F16B 39/26

(54) **SPANNSYSTEM UND VERFAHREN ZUM VORSPANNEN EINES BEFESTIGUNGSELEMENTS**
CLAMPING SYSTEM AND METHOD FOR PRESTRESSING A FASTENING ELEMENT
SYSTÈME DE SERRAGE ET PROCÉDÉ DE PRÉCONTRAINTE D'UN ÉLÉMENT DE FIXATION

(30) Priorität: 25.03.2019 DE 102019107607
(43) Veröffentlichungstag der Anmeldung: 30.09.2020
(73) Patentinhaber: fischerwerke GmbH & Co. KG, 72178 Waldachtal (DE)
(72) Erfinder: Linka, Martin, 72160 Horb a.N. (DE); Freudigmann, Lars, 72072 Tübingen (DE); Wälder, Jonas, 71069 Sindelfingen (DE); Lehmann, David, 72275 Alpirsbach (DE)
(74) Vertreter: Suchy, Ulrich Johannes

(56) Entgegenhaltungen:
- EP-A1- 3 150 868
- EP-A1- 3 376 056
- US-A- 2 850 937

## Beschreibung

Die Erfindung betrifft ein Spannsystem gemäß dem Oberbegriff des Anspruchs 1 und ein Verfahren zum Vorspannen eines Befestigungselements mit den Merkmalen des Oberbegriffs des Anspruchs 13.

In der Befestigungstechnik ist es üblich, ein Befestigungselement, wie beispielsweise einen Spreizanker oder eine Schraube, bei der Montage vorzuspannen, so dass das Befestigungselement ein Anbauteil, das an einem Bauteil befestigt wird, mit einer definierten Spannkraft gegen das Bauteil drückt. Das Anbauteil kann beispielsweise eine Kopfplatte eines Stahlträgers sein, der mit Spreizankern an einem Bauteil aus Beton befestigt wird. Ein weiteres Beispiel ist die Verbindung von Stahlbauteilen im Stahlbau mit vorgespannten Schraubverbindungen, beispielsweise zur Befestigung eines Trägers an einer Stütze. Die Vorspannung, also das Aufbringen der Spannkraft, erfolgt üblicherweise durch Drehen einer Mutter oder eines Schraubenkopfs des Befestigungselements mit einem Drehmomentschlüssel oder einem entsprechenden Werkzeug, mit dem ein definiertes Drehmoment auf das Befestigungselement aufgebracht wird, das wiederum die gewünschte Spannkraft im Befestigungselement erzeugt.

Um die Verwendung eines Drehmomentschlüssels zu vermeiden, sind Befestigungselemente bekannt, die eine Sollbruchstelle aufweisen, die beim Erreichen der gewünschten Spannkraft beziehungsweise des gewünschten Drehmoments versagt und so das Spannen des Befestigungselements beendet. Ein derartiges System ist beispielsweise in dem Gebrauchsmuster DE 7624985 U1 beschrieben. Als Alternative ist die Verwendung von Visualisierungselementen bekannt, bei denen beim Erreichen der gewünschten Spannkraft eine meist farbige Markierung sichtbar wird, sodass ein Anwender weiß, dass die gewünschte Spannkraft erreicht und damit die Montage des Befestigungselements zu beenden ist. Aus der Offenlegungsschrift WO 2010/135175 A2 ist beispielsweise eine Unterlegscheibe bekannt, bei der beim Erreichen der gewünschten Spannkraft Farbe durch radiale Öffnungen am Rand der Unterlegscheibe austritt. Zudem ist aus der Offenlegungsschrift WO 2018/134108 A1 ein Spannsystem mit einer Spannscheibe bekannt, bei dem durch eine Verformung der Spannscheibe ein farbiger Kunststoffring in radiale, in axialer Richtung offene Schlitze gedrückt und dadurch der Kunststoffring für einen Anwender bei der Montage sichtbar wird. Sobald der Kunststoffring in den Schlitzen sichtbar wird, ist dies für den Anwender ein Hinweis, dass die gewünschte Spannkraft erreicht und die Montage des Befestigungselements zu beenden ist. Tritt der Kunststoffring durch weiteres Spannen radial aus den Schlitzen aus, so ist dies ein Zeichen für den Anwender, dass das Befestigungselement zu sehr angezogen wurde, und das gewünschte Drehmoment beziehungsweise die planmäßig aufzubringende Spannkraft überschritten ist. Weitere Spannsysteme sind aus der EP 3 376 056 A1 sowie der US 2 850 937 A bekannt.

Allerdings ist bei den bekannten Systemen nicht ausgeschlossen, dass die planmäßig aufzubringende Spannkraft überschritten wird, beispielsweise durch eine falsche Einstellung des Drehwerkzeugs oder durch Unachtsamkeit des Anwenders beim Spannen.

Aufgabe der Erfindung ist es daher, ein alternatives Spannsystem vorzuschlagen, das Fehler beim Spannen besser vermeidet.

Diese Aufgabe wird erfindungsgemäß durch ein Spannsystem mit den Merkmalen des Anspruchs 1 und durch ein Verfahren gemäß Anspruch 13 gelöst.

Das erfindungsgemäße Spannsystem zum Spannen eines Befestigungselements umfasst das Befestigungselement, ein Verformungselement und ein Montagewerkzeug. Das Befestigungselement ist insbesondere eine Schraube, wie sie üblicherweise im Stahlbau verwendet wird, oder vorzugsweise ein Bolzen- oder Hülsenanker, mit dem ein Anbauteil an einem Bauteil aus Beton befestigt werden kann. "Spannen" des Befestigungselements meint hier das planmäßige Aufbringen einer Spannkraft auf das Befestigungselement, wie dies beispielsweise von vorgespannten Schraubverbindungen im Stahlbau oder von der Montage von Spreizankern, also von Bolzen- und Hülsenankern, allgemein bekannt ist. Damit das Befestigungselement von einem Anwender gespannt werden kann, weist das Befestigungselement ein Spannelement mit einem Werkzeugsitz zum drehfesten Verbinden des Spannelements mit dem Montagewerkzeug auf, sodass das Spannelement zum Spannen des Befestigungselements mit dem Montagewerkzeug um eine Längsachse des Befestigungselements gedreht werden kann. Die Längsachse des Befestigungselements bildet auch die Längsachse des Spannsystems in einer Vormontagestellung, in der das Befestigungselement und das Verformungselement planmäßig an einem zu befestigenden Anbauteil und/oder an einem Bauteil als Befestigungsgrund angeordnet sind und das Montagewerkzeug planmäßig mit dem Spannelement verbunden ist. Bei dem Spannelement handelt es sich insbesondere um eine Mutter oder um einen Schraubenkopf mit am Umfang angeordneten Schlüsselflächen oder einem Innenmehrkant als Werkzeugsitz. Das Montagewerkzeug ist entsprechend beispielsweise eine Sechskantnuss oder ein passender Schrauberbit für den Innenmehrkant.

Das Verformungselement, allgemein ein stauchbares Element, vorzugsweise eine gewölbte oder konische Spannscheibe, wird beim Spannen des Befestigungselements unter Wirkung einer Spannkraft von einer Ausgangshöhe auf eine Endmontagehöhe zusammengedrückt. Die "Ausgangshöhe" ist die, bezogen auf die Längsachse des Spannsystems, in axialer Richtung gemessene Höhe des Verformungselements in der Vormontagestellung, in der das Verformungselement noch nicht durch das Spannen des Befestigungselements verformt, also noch unverformt ist. Dagegen ist die "Endmontagehöhe" die in axialer Richtung gemessene Höhe des Verformungselements, die in einer Endmontagestellung gemessen wird. Die "Endmontagestellung" ist der Zustand des Spannsystems, bei dem die planmäßige Montage des Befestigungselements beendet ist.

Um zu verhindern, dass beim Spannen des Befestigungselements die planmäßig durch das Spannen aufzubringende Spannkraft versehentlich überschritten wird, weist das erfindungsgemäße Spannsystem einen Anschlag auf, an oder mit dem das Montagewerkzeug beim Spannen derart anliegt, dass der Anschlag eine axiale Bewegung des Montagewerkzeugs begrenzt. Insbesondere verhindert der Anschlag, dass das Montagewerkzeug nach dem Ansetzen am Spannelement beim Spannen des Befestigungselements in axialer Richtung zum Anbauteil und/oder zum Bauteil hingeführt werden kann. Hierdurch wird erreicht, dass sich das Spannelement beim Spannen des Befestigungselements und dem daraus resultierenden Zusammendrücken des Verformungselements auf die Endmontagehöhe mit seinem Werkzeugsitz aus der drehfesten Verbindung mit dem Montagewerkzeug löst, sodass beim Erreichen der Endmontagestellung keine drehfeste Verbindung zwischen dem Montagewerkzeug und dem Spannelement mehr besteht. Insbesondere wird das Spannelement beim Spannen zum Anbauteil beziehungsweise zum Bauteil hinbewegt, während der Anschlag eine Bewegung des Montagewerkzeugs zum Anbauteil beziehungsweise zum Bauteil hin verhindert. Abhängig von der Ausbildung des Spannelements und des Montagewerkzeugs kann es insbesondere ausreichend sein, wenn das Montagewerkzeug erst am Ende des Spannvorgangs, also erst vor dem Erreichen der Endmontagestellung, an oder mit dem Anschlag anliegt. Das Verformungselement verformt sich beim Spannen durch das Aufbringen der Spannkraft auf das Befestigungselement. Damit sich der Werkzeugsitz aus der drehfesten Verbindung mit dem Montagewerkzeug lösen kann, ist das Verformungselement derart gestaltet, dass für die Verformung des Verformungselements die planmäßige Spannkraft auf das Befestigungselement aufgebracht werden muss. Erst wenn über das Befestigungselement die planmäßige Spannkraft auf das Verformungselement wirkt, kann das Verformungselement bis zu einer planmäßigen Endmontagehöhe, in der der Werkzeugsitz aus der drehfesten Verbindung mit dem Montagewerkzeug gelöst ist, zusammengedrückt werden.

Beispielsweise handelt es sich bei dem Montagewerkzeug um eine Sechskantnuss, die an einem Schlagschrauber angeordnet ist. Das Spannelement des Befestigungselements ist in diesem Fall beispielsweise ein Schraubenkopf mit einer Sechskant-Schlüsselfläche. Die Sechskantnuss steht an oder mit dem Anschlag an, sodass sie sich beim Spannen, also beim Drehen der Schraube, nicht weiter mit der Schraube in axialer Richtung bewegen kann. Beim Spannen wird das Verformungselement durch die Wirkung der aufgebrachten Spannkraft verformt und die Sechskant-Schlüsselfläche bewegt sich axial, der Verformung folgend, aus der Nuss heraus, soweit, bis die Nuss die Drehbewegung nicht mehr auf die Schraube übertragen kann. Ein weiteres Spannen ist somit nicht mehr möglich. Ein Anwender weiß somit, dass die planmäßige Montage des Befestigungselements erfolgreich abgeschlossen ist. Ein unbeabsichtigtes Überdrehen, also das Aufbringen einer zu großen Spannkraft auf das Befestigungselement, ist somit ausgeschlossen.

Die Verformung des Verformungselements, also das Zusammendrücken, kann bei Zunahme der aufgebrachten Spannkraft kontinuierlich, insbesondere linear elastisch erfolgen, wie dies beispielsweise von Tellerfedern bekannt ist.

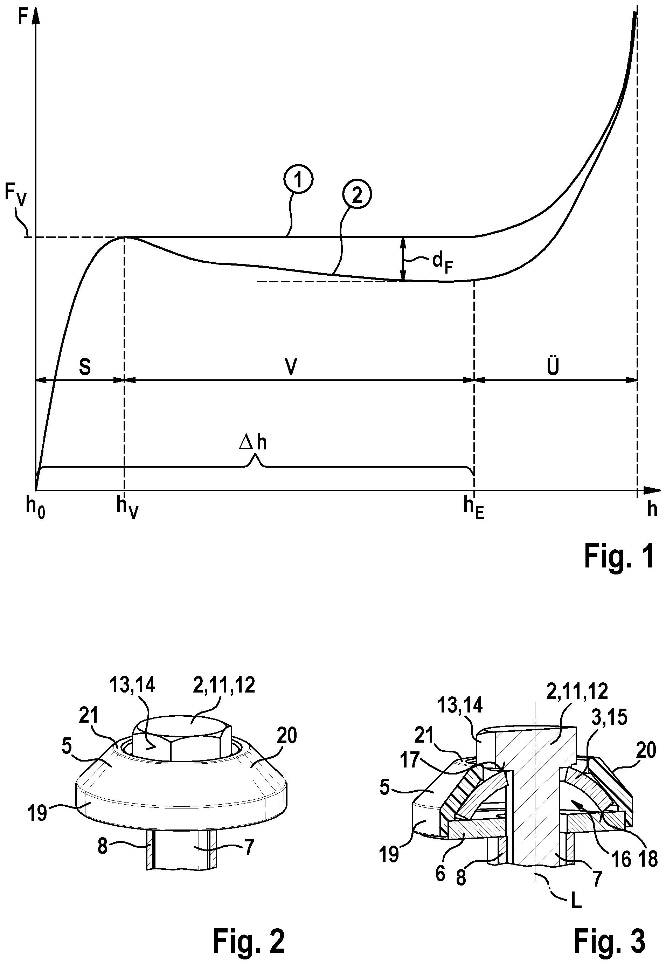

Vorzugsweise ist das Verformungselement derart gestaltet, dass die zum Zusammendrücken der Spannscheibe um den Verformungsweg Δh von der Ausgangshöhe h₀ auf die Endmontagehöhe h_{E} notwendige Spannkraft F in einem ersten Spannschritt S des Spannvorgangs, bei kontinuierlicher Verformung des Verformungselements, zunächst bis zum Erreichen der planmäßigen Spannkraft Fv ansteigt, wie dies in Figur 1 allgemein dargestellt ist. Die Verformung beim Zusammendrücken des Verformungselements auf die Höhe h_{V} kann dabei elastisch und/oder plastisch erfolgen. In einem sich an den ersten Spannschritt S anschließenden Verformungsschritt V des Spannvorgangs nimmt die Spannkraft F bis zum Erreichen der Endmontagehöhe h_{E} nicht weiter zu. Die Spannkraft F bleibt in dem Verformungsschritt V insbesondere konstant (Kurve 1) oder sie fällt wieder ab (Kurve 2), wobei im Verformungsschritt V die Spannkraft F auch teilweise konstant sein und in Teilen des Verformungsschritts V abfallen kann. Auch ein Abfallen und erneutes Ansteigen der Spannkraft F ist möglich, wobei die Spannkraft F im Verformungsschritt V auch dann die planmäßige Spannkraft Fv nicht überschreitet.

Durch den auf den ersten Spannschritt S folgenden Verformungsschritt V wird erreicht, dass sich das Spannelement beim Zusammendrücken des Verformungselements auf die Endmontagehöhe h_{E} mit seinem Werkzeugsitz aus der drehfesten Verbindung mit dem Montagewerkzeug lösen kann, und dass Toleranzen im Verformungsweg Δh, also dem Unterschied der Höhe h des Verformungselements zwischen der Ausgangshöhe h₀ und der Endmontagehöhe h_{E}, die durch die Verwendung unterschiedlicher Montagewerkzeuge auftreten können, für das Erreichen der planmäßigen Spannkraft Fv unerheblich sind und das planmäßige Spannen des Befestigungselements nicht behindern. Dies bedeutet, dass das absolute Maß der Endmontagehöhe h_{E} abhängig vom verwendeten Montagewerkzeug sein kann, während die planmäßig zu erreichende Spannkraft Fv unabhängig vom verwendeten Montagewerkzeug ist.

Insbesondere ist die Differenz der Höhe h zwischen der Ausgangshöhe h₀ des Verformungselements in der unverformten Vormontagestellung und der Höhe h_{V} des Verformungselements beim Erreichen der planmäßigen Spannkraft Fv nicht größer als der Unterschied zwischen der Höhe h_{V} des Verformungselements beim Erreichen der planmäßigen Spannkraft F_{V} und der Endmontagehöhe h_{E} des Verformungselements in der Endmontagestellung. Insbesondere beträgt die Abnahme der Höhe h des Verformungselements zwischen der Ausgangshöhe h₀ des Verformungselements in der unverformten Vormontagestellung und der Höhe hv des Verformungselements beim Erreichen der planmäßigen Spannkraft F_{V} nicht mehr als ein Drittel des Verformungswegs Δh. Insbesondere beträgt die Abnahme der Höhe h des Verformungselements zwischen der Ausgangshöhe h₀ des Verformungselements in der unverformten Vormontagestellung und der Höhe hv des Verformungselements beim Erreichen der planmäßigen Spannkraft F_{V} nicht mehr als ein Viertel des Verformungswegs Δh.

Die Spannkraft F nimmt nach dem Erreichen der planmäßigen Spannkraft Fv im Verformungsschritt V maximal um den Wert d_{F} ab, der maximal 50 Prozent der planmäßigen Spannkraft Fv beträgt. Insbesondere beträgt die Abnahme d_{F} maximal 35 Prozent, insbesondere maximal 20 Prozent der planmäßigen Spannkraft Fv.

Wie in Figur 1 gezeigt ist, schließt sich an den Verformungsschritt V ein Überlastschritt Ü an, bei dem das Verformungselement weiter verformt wird, wobei die Spannkraft F beim weiteren Spannen über die planmäßige Spannkraft Fv ansteigt. Da die Spannkraft F erst nach dem Erreichen der Endmontagehöhe h_{E} wieder ansteigt, ist ausgeschlossen, dass das Befestigungselement durch das Aufbringen einer zu großen Spannkraft F beschädigt wird oder versagt, da ein weiteres Spannen und ein Unterschreiten der Endmontagehöhe h_{E}, wie oben beschrieben, erfindungsgemäß ausgeschlossen ist.

Das Verformungselement ist vorzugsweise eine Spannscheibe, die in der Vormontagezstellung konisch und/oder kegelförmig gewölbt ist. Die Spannscheibe ist insbesondere konkav nach innen gekrümmt, so dass ein Hohlraum im Innern der Spannscheibe entsteht. Die Spannscheibe ist insbesondere aus Metall, insbesondere aus Stahl oder Edelstahl hergestellt. Sie weist insbesondere ein Durchgangloch für das Befestigungselement auf, das insbesondere mittig, insbesondere konzentrisch zur Längsachse angeordnet ist. Insbesondere ist der Stahl, aus dem die Spannscheibe hergestellt ist, so gewählt, dass die Spannscheibe beim Erreichen der planmäßigen Spannkraft Fv beziehungsweise der entsprechenden Höhe hv bereits plastisch verformt ist. Insbesondere ist die Spannscheibe in der Endmontagestellung plastisch verformt.

Erfindungsgemäß ist die Spannscheibe in der Endmontagestellung nicht flächig eben gedrückt. Das heißt, dass die Spannscheibe auch im Überlastschritt Ü der Figur 1 weiter zusammengedrückt und ihre Höhe h weiter verringert werden kann. Ein sprunghafter Anstieg der Spannkraft F im Überlastschritt Ü wird hierdurch vermieden. Beispielsweise ist die konisch und/oder kegelförmig gewölbte Spannscheibe aus einem Stahl S235JR nach DIN EN ISO 9444-2:2010-11 oder einem Edelstahl mit der Werkstoffnummer 1.4401 nach EN 10027-2:2015-07 hergestellt, insbesondere aus einem Stahlblech durch Umformen im Stanzbiegeverfahren. Die Spannscheibe weist insbesondere ein Verhältnis von der Ausgangshöhe h₀ zur Dicke des Stahlblechs, aus dem sie durch Umformen hergestellt ist, von circa von 2,5 bis 5, insbesondere von 3 bis 4 auf. So beträgt die Ausgangshöhe h₀ beispielsweise 8 Millimeter, bei einer Blechdicke von 2,5 Millimetern. Der Außendurchmesser der Spannscheibe in der unverformten Montagestellung beträgt in diesem Fall ungefähr 30 Millimeter, während der Durchmesser des Durchgangslochs für das Befestigungselement 13 Millimeter beträgt und beispielsweise für eine metrische Sechskantschraube der Größe M12 vorgesehen ist.

Das Spannsystem kann ein Indikatorelement aufweisen, das das Erreichen der Endmontagestellung direkt oder indirekt anzeigt. Die Anzeige kann beispielsweise direkt visuell oder indirekt durch die Erzeugung eines elektrischen Signals mittels einer entsprechenden Schaltung erfolgen. Beispielsweise wird mit dem Indikatorelement ein elektrisches Signal erzeugt, das ein Abschalten eines zum Spannen verwendeten Schraubers bewirkt, wodurch das Erreichen der Endmontagestellung einem Anwender indirekt angezeigt wird. Alternativ kann es sich bei dem Indikatorelement um ein visuell wahrnehmbares Element handeln, beispielsweise um einen farbigen Kunststoffring aus Silikon oder einem anderen ähnlich weichen Kunststoff. Der Kunststoffring wird beim Spannen des Befestigungselements und dem Zusammendrücken des Verformungselements derart bewegt, dass ein Anwender ihn wahrnehmen kann, wenn die Endmontagestellung erreicht ist. Dies hat den Vorteil, dass auch nach erfolgter Montage eine einfache Kontrollmöglichkeit dafür vorhanden ist, dass das Spannen des Befestigungselements planmäßig erfolgt ist. Ist das Verformungselement als konisch und/oder gewölbte Spannscheibe ausgebildet und insbesondere konkav nach innen gekrümmt, so ist das Indikatorelement in der unverformten Vormontagestellung insbesondere innerhalb der Wölbung beziehungsweise des Konus der Spannscheibe angeordnet, insbesondere in einem konkaven Hohlraum, sodass der farbige Kunststoffring in der Vormontagestellung für einen Anwender nicht sichtbar ist. Wird die Spannscheibe nun bis zur Endmontagestellung zusammengedrückt, so kann der Kunststoffring in bekannter Weise durch Durchbrüche in der Spannscheibe nach außen austreten, sodass ein Anwender das farbige Material direkt als Zeichen dafür wahrnimmt, dass die Endmontagestellung erreicht ist.

Der Anschlag kann am Befestigungselement, am Verformungselement oder am Montagewerkzeug oder aber an einem zusätzlichen Abstandselement ausgebildet sein. Zudem ist es ausreichend, wenn das Montagewerkzeug erst am Ende des Spannvorgangs, also erst vor dem Erreichen der Endmontagestellung, an oder mit dem Anschlag anliegt. Dass das Montagewerkzeug an oder mit dem Anschlag anliegt, bedeutet insbesondere, dass sich das Montagewerkzeug über den Anschlag direkt oder indirekt am Anbauteil oder dem Bauteil derart abstützt, dass eine axiale Bewegung des Werkzeugs in eine Montagerichtung entlang der Längsachse zum Anbauteil oder dem Bauteil hin dann nicht mehr möglich ist. Vorzugsweise liegt das Montagewerkzeug bereits in der Vormontagestellung am oder mit dem Anschlag an. Dies hat den Vorteil, dass ein Anwender das Montagewerkzeug beim Spannen nicht weiter axial in Montagerichtung bewegen muss, sondern sich bereits am Anfang des Spannvorgangs mit dem Montagewerkzeug mit dem Anschlag oder am Anschlag abstützen kann.

Vorzugsweise weist das Verformungselement eine dem Spannelement zugewandte Lagerfläche auf, an der sich das Befestigungselement abstützt. Zudem umfasst das Verformungselement eine dem Spannelement abgewandte Widerlagerfläche zur Abstützung an einem Lagergrund. Die Abstützung kann direkt oder indirekt, beispielsweise über ein zusätzliches Stützelement erfolgen. Insbesondere wird beim Spannen des Befestigungselements, also beim Aufbringen der Spannkraft auf das Verformungselement durch Drehen des Spannelements um die Längsachse, die Lagerfläche in die Montagerichtung zur Widerlagerfläche hinbewegt, wodurch das Verformungselement zusammengedrückt wird, bis die Endmontagehöhe in der Endmontagestellung erreicht ist. Der Lagergrund kann beispielsweise das Anbauteil oder das Bauteil sein. Ist das Abstandselement als hohlzylindrische Hülse oder in der Form eines hohlen Kegelstumpfs ausgeführt, so bildet insbesondere die Grundfläche die Widerlagerfläche und die Deckfläche die Lagerfläche.

Vorzugsweise ist der Abstand vom Anschlag zu einer dem Spannelement abgewandten Widerlagerfläche, mit der sich das Verformungselement direkt oder indirekt an dem Lagergrund abstützt, in der Vormontagestellung gleich wie in der Endmontagestellung. Das bedeutet, dass sich das Montagewerkzeug, wenn es am Anschlag anliegt, beim Spannen des Befestigungselements nicht zur Widerlagerfläche hinbewegt. Dagegen wird sich das Spannelement erfindungsgemäß beim Spannen zur Widerlagerfläche hinbewegen, sodass sich das Spannelement aus der drehfesten Verbindung mit dem Montagewerkzeug löst, wodurch die Montage in der Endmontagestellung beendet wird.

Weiterhin ist bevorzugt, dass in der Endmontagestellung der axiale Abstand des Anschlags zur Widerlagerfläche größer ist als die Endmontagehöhe des Verformungselements.

Der Anschlag kann am Befestigungselement, am Verformungselement oder am Montagewerkzeug ausgebildet sein. Der Anschlag kann aber auch an einem Abstandselement ausgebildet sein, das ein eigenständiges Bauteil des Spannsystems ist oder am Befestigungselement, dem Verformungselement oder am Montagewerkzeug angeordnet ist, insbesondere einstückig. Vorzugsweise umgibt das Abstandselement, an dem der Anschlag ausgebildet ist, das Verformungselement, insbesondere bereits in der Vormontagestellung, insbesondere zudem in der Endmontagestellung, insbesondere während des Spann- und des Verformungsschritts. Das Abstandselement kann beispielsweise eine Art Hülse bilden und insbesondere geschlitzt sein. Das Abstandselement kann in diesem Fall aus mehreren einzelnen Elementen bestehen, die miteinander verbunden sind. Vorzugsweise ist das Abstandselement mit dem Verformungselement verbunden, insbesondere einstückig, was einen einfachen Aufbau des Spannsystems gewährleistet.

Insbesondere weist das Abstandselement eine Durchgangsöffnung für das Befestigungselement beziehungsweise für das Spannelement auf, dessen Innendurchmesser größer als ein Außendurchmesser des Werkzeugsitzes ist. Die Durchgangsöffnung erstreckt sich insbesondere in Richtung der Längsachse und ist zu dieser parallel oder konzentrisch. Dadurch kann beispielsweise ein Sechskantkopf einer Schraube drehend in die Durchgangsöffnung eingeführt werden, so dass das Abstandselement nicht zwingend mit dem Abstandselement mitdreht. Dies ist insbesondere dann notwendig, wenn das Abstandselement einstückig mit dem Montagewerkzeug ist, und eine Mitdrehen des Spannelements mit dem Abstandselement nach Erreichen der Endmontagestellung verhindert werden muss.

Das Abstandselement, das das Verformungselement umgibt, kann derart gestaltet sein, dass es in der Endmontagestellung auch den Werkzeugsitz umgibt. Das Abstandselement kann in diesem Fall als Diebstahlssicherung wirken, die verhindert, dass das Befestigungselement von einem Unbefugten wieder gelöst werden kann. Das Abstandselement kann aber in der Endmontagestellung auch abnehmbar sein, sodass es nach erfolgter Montage, also nach dem Erreichen der Endmontagestellung, vom Befestigungselement und/oder vom Verformungselement abgenommen oder getrennt werden kann, sodass der Werkzeugsitz wieder zugänglich ist, so dass das Montagewerkzeug wieder angesetzt und das Befestigungselement zur Demontage durch Drehen gelöst werden kann.

Vorzugsweise ist das Abstandselement, das das Verformungselement umgibt, drehfest mit dem Befestigungselement verbunden. Dies ist insbesondere dann von Vorteil, wenn das Abstandselement selbst einen Werkzeugsitz zum drehfesten Ansetzen eines Werkzeugs zur Demontage aufweist. Befindet sich das Spannsystem in der Endmontagestellung, dann kann in diesem Fall zur Demontage am Werkzeugsitz des Abstandselements ein Demontagewerkzeug angesetzt werden, mit dem beispielsweise eine Schraube von einer Mutter durch Drehen abgeschraubt werden kann.

Vorzugsweise weist das Spannsystem ein Stützelement auf, auf dem sich das Verformungselement abstützen kann. Insbesondere stützt sich das Stützelement direkt am Lagergrund ab. Das Stützelement kann insbesondere aus einer ebenen Unterlegscheibe bestehen, die insbesondere einen radial zur Längsachse gemessen Außendurchmesser aufweist, der größer ist, als der Durchmesser des Verformungselements. Das Stützelement bildet somit eine definierte Ebene, auf der sich das Verformungselement beim Spannen, also wenn das Verformungselement zusammengedrückt und verformt wird, bewegen, insbesondere radial von der Längsachse weg weiten kann. Anstelle einer zusätzlichen Unterlegscheibe kann das Stützelement auch einstückig mit dem Verformungselement oder einem weiteren Element des erfindungsgemäßen Spannsystems sein. Ist das Verformungselement beispielsweise in der Form einer Spannscheibe aus Metall ausgebildet, dann besteht das Stützelement insbesondere aus einstückig mit dem Verformungselement verbundenen, radial zur Längsachse hin gebogenen Laschen, die das Stützelement und gleichzeitig auch die Widerlagerfläche bilden. Das Stützelement bildet in diesem Fall eine definierte flächig ausgebildete Widerlagerfläche, auf der das Verformungselement flächig an einem Lagergrund anliegt, was eine Bewegung des Verformungselements in radialer Richtung beim Zusammendrücken erleichtert. Ist ein Indikatorelement vorhanden, so kann das Stützelement das Indikatorelement, beispielsweise einen Silikonring, gegen den Druck durch das Verformungselement, das beim Spannen zusammen- und gegen das Indikatorelement gedrückt wird, in axialer Richtung stützen. Hierdurch kann sich das Indikatorelement nur radial nach außen, von der Längsachse und dem Befestigungselement wegbewegen, so dass das Indikatorelement unabhängig davon funktioniert, aus welchem Material das Anbauteil und/oder das Bauteil besteht oder wie rau die Oberfläche des Anbauteils beziehungsweise des Bauteils ist.

Insbesondere kann das Stützelement den Anschlag für das Montagewerkzeug bilden, beziehungsweise das Stützelement bildet einen Gegenanschlag für den Anschlag, der vorzugsweise am Montagewerkzeug angeordnet ist. Insbesondere kann am Montagewerkzeug, beispielsweise einer handelsüblichen Sechskantnuss, das Abstandselement angeordnet sein, das den Anschlag aufweist, mit dem es direkt oder indirekt am Stützelement oder am Lagergrund anliegt. Das Abstandselement kann auch in diesem Fall als eine Art Abstandshülse ausgebildet sein, die beispielsweise auf die handelsüblichen Sechskantnuss aufgesteckt werden kann. Alternativ kann das Abstandselement einstückig mit der Sechskantnuss sein.

Weist das Montagewerkzeug das Abstandselement auf, so ist vorzugsweise an dessen in Aufsteckrichtung vorderen Ende der Anschlag angeordnet, wobei der axiale Abstand des Anschlags zu den Werkzeugflächen des Montagewerkzeugs größer als die axiale Länge des Eingriffs des Werkzeugsitzes in die Werkzeugflächen in der Vormontagestellung ist. Mit "Aufsteckrichtung" ist die axiale Richtung gemeint, in die ein Montagewerkzeug geführt werden muss, um mit dem Werkzeugsitz drehfest verbunden zu werden. Die Aufsteckrichtung ist beispielsweise die Richtung, in die die Werkzeugfläche einer Sechskantnuss bewegt werden muss, um auf einen Schraubenkopf aufgesteckt zu werden. Die "Werkzeugfläche" ist dabei die Fläche, die eine Drehbewegung auf den Werkzeugsitz, also beispielsweise auf die Schlüsselfläche einer Mutter oder einer Sechskantschraube, übertragen kann. Die Aufsteckrichtung ist insbesondere identisch mit der Montagerichtung. Ist der Werkzeugsitz als Sechskant ausgeführt, wie dies bei einer Sechskantschraube oder eine Sechskantmutter der Fall ist, dann ist insbesondere der axiale Abstand des Anschlags zu den Werkzeugflächen des Montagewerkzeugs größer als die axiale Höhe der Schlüsselflächen des Werkzeugsitzes.

Vorzugsweise ist das Verformungselement eine kegelförmige und/oder gewölbte Spannscheibe, die ausgehend von der Ausgangshöhe auf die Endmontagehöhe derart zusammendrückbar ist, dass die zum Zusammendrücken notwendige Kraft bei kontinuierlicher Verformung zunächst ansteigt, und dann bis zum Erreichen der Endmontagehöhe konstant bleibt oder wieder abfällt, wie dies in Figur 1 dargestellt ist. "Gewölbt" meint hier allgemein, dass die Spannscheibe, die insbesondere rotationssymmetrisch zur Längsachse ausgebildet ist, eine Mantelfläche aufweist, die keinen einheitlichen Kegelwinkel mit der Längsachse einschließt. Insbesondere meint gewölbt, dass die Spannscheibe, die eine dem Spannelement zugewandte Lagerfläche, an der sich das Befestigungselement abstützt, und eine dem Spannelement abgewandte Widerlagerfläche zur Abstützung an einem Lagergrund aufweist, in einem ersten Bereich, der der Widerlagerfläche benachbart ist, steiler ist als in einem zweiten Bereich, der der Lagerfläche benachbart ist. Dies bedeutet, dass eine erste Tangente, die im ersten Bereich an die Mantelfläche angelegt wird, mit der Längsachse einen kleineren Winkel einschließt, als eine zweite Tangente, die im zweiten Bereich an die Mantelfläche angelegt wird. Insbesondere schließt eine dritte Tangente, die in einem dritten Bereich, der sich radial zwischen dem ersten Bereich und im zweiten Bereich befindet, einen Winkel mit der Längsachse ein, der größer als der erste Winkel, aber kleiner als der zweite Winkel ist. Insbesondere meint gewölbt, dass die Mantelfläche aus zwei oder mehr kegelstumpfförmigen Flächen besteht, die in axialer Richtung aneinandergrenzen und ineinander übergehen. Alternativ ist die Mantelfläche kontinuierlich von der Widerlagerfläche zur Lagerfläche konkav gewölbt.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiteren Ausführungsbeispiele aufweisen, sind möglich.

Die Erfindung wird nachfolgend anhand von vier in der Zeichnung dargestellten Ausführungsbeispielen näher erläutert.

Die Figuren der Zeichnung zeigen:
- Figur 1: ein Spannkraft-Verformungsdiagramm eines Verformungselements eines erfindungsgemäßen Spannsystems;
- Figur 2: ein erstes erfindungsgemäßes Spannsystem ohne Montagewerkzeug in einer perspektivischen Ansicht;
- Figur 3: das erste erfindungsgemäße Spannsystem ohne Montagewerkzeug in einer perspektivischen Schnittdarstellung;
- Figur 4: das erste erfindungsgemäße Spannsystem in einer unverformten Vormontagestellung in einem Axialschnitt;
- Figur 5: das erste erfindungsgemäße Spannsystem in einer Endmontagestellung in einem Axialschnitt;
- Figur 6: ein zweites erfindungsgemäßes Spannsystem in einer Ansicht;
- Figur 7: das zweite erfindungsgemäße Spannsystem in einer perspektivischen Schnittdarstellung;
- Figur 8: das zweite erfindungsgemäße Spannsystem in einer unverformten Vormontagestellung in einem Axialschnitt;
- Figur 9: das zweite erfindungsgemäße Spannsystem in einer Endmontagestellung in einem Axialschnitt;
- Figur 10: ein drittes erfindungsgemäßes Spannsystem ohne Montagewerkzeug in einer perspektivischen Ansicht;
- Figur 11: ein viertes erfindungsgemäßes Spannsystem ohne Montagewerkzeug in einem Axialschnitt;
- Figur 12: das dritte erfindungsgemäße Spannsystem in einer unverformten Vormontagestellung in einem Axialschnitt; und
- Figur 13: das dritte erfindungsgemäße Spannsystem in einer Endmontagestellung in einem Axialschnitt.

In den Figuren 2 bis 5 ist ein erstes erfindungsgemäßes Spannsystem 1 zum Spannen eines Befestigungselements 2 dargestellt. Das Spannsystem 1 umfasst neben dem Befestigungselement 2 ein Verformungselement 3 und ein Montagewerkzeug 4, das in den Figuren 2 und 3 nicht dargestellt ist. Zudem weist das erste Spannsystem 1 ein Abstandselement 5 und ein Stützelement 6 auf. Bei dem Befestigungselement 2 handelt es sich um einen Hülsenanker, der neben einer Sechskantschraube 7 eine Spreizhülse 8 umfasst, an deren in Montagerichtung M vorderen Ende ein Spreizteil angeordnet ist (nicht dargestellt), mit dem der Hülsenanker in einem Bauteil 9 verankert werden kann. Das Bauteil 9 ist hier aus Beton und kann auch als Verankerungsgrund bezeichnet werden. Die Montagerichtung M ist hier die Richtung, in der das Befestigungselement 2 in ein Bohrloch im Bauteil 9 planmäßig eingebracht beziehungsweise das Montagewerkzeug 4 auf das Befestigungselement 2 zur drehfesten Verbindung aufgesetzt wird. Die Montagerichtung M entspricht somit der Aufsteckrichtung. Mit dem Befestigungselement 2 wird ein Anbauteil 10, hier eine Stahlplatte, mit einer definierten Kraft gegen das Bauteil 9 gepresst. Dies geschieht dadurch, dass die Sechskantschraube 7, die durch ein Durchgangsloch des Verformungselements 3 durchgeführt ist, gespannt und somit der Schraubenkopf 11 relativ zum Bauteil 9 in Montagerichtung M bewegt und über das Verformungselement 3 und das Stützelement 6 gegen das Anbauteil 10 gepresst wird. Der Schraubenkopf 11 wirkt als Spannelement 12 und weist eine Sechskantschlüsselfläche 13 als Werkzeugsitz 14 auf, so dass das Montagewerkzeug 4, hier eine Sechskantnuss, zur drehfesten Verbindung auf den Werkzeugsitz 14 aufgesetzt werden und die Sechskantschraube 7 mit dem Schraubenkopf 11 als Spannelement 12 um die Längsachse L des Befestigungselements 2, beziehungsweise des Spannsystems 1, gedreht werden kann.

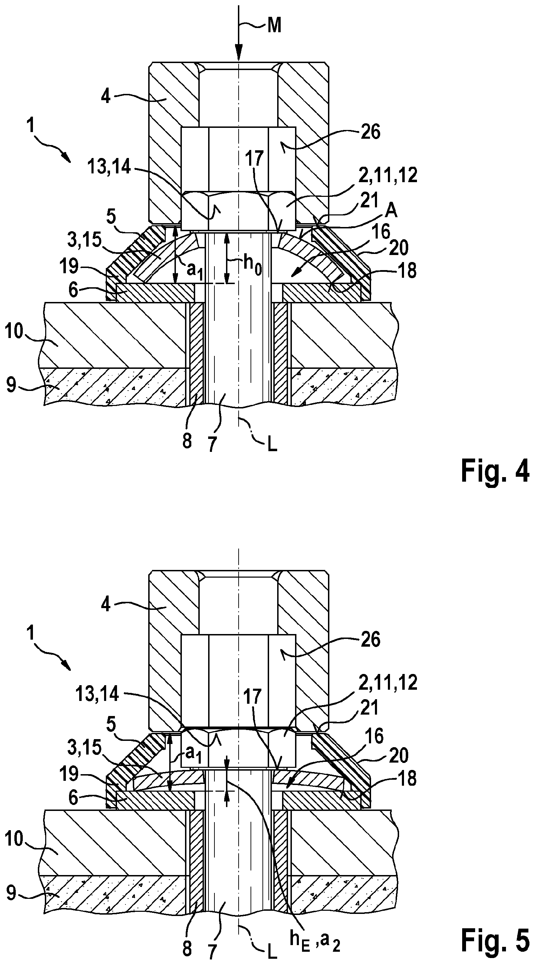

Die Übertragung der Spannkraft F vom Schraubenkopf 11 auf das Anbauteil 10 erfolgt über das Verformungselement 3 und das Stützelement 6, das am Anbauteil 10 anliegt. Das Stützelement 6 ist eine handelsübliche Unterlegscheibe aus Stahl. Das Verformungselement 3 ist eine Spannscheibe 15, die konkav zum Stützelement 6 hin gewölbt ist, so dass zwischen der Spannscheibe 15 und dem Stützelement 6 ein Hohlraum 16 vorhanden ist. Die Spannscheibe 15 kann unter Wirkung der Spannkraft F von einer Ausgangshöhe ho, die sie in einer in der Figur 4 dargestellten unverformten Vormontagestellung aufweist, auf eine Endmontagehöhe h_{E} in einer Endmontagestellung zusammengedrückt werden, wie dies in Figur 5 zu sehen ist. Die Spannscheibe 15 ist ebenfalls aus einem Stahlblech aus einem Stahl S235JR nach DIN EN ISO 9444-2:2010-11, als Stanzbiegeteil hergestellt. Die Blechdicke beträgt 2,5 Millimeter, bei einem Durchmesser von 30 Millimetern in der unverformten Vormontagestellung. Die Spannscheibe 15 ist derart gestaltet, dass die zum Zusammendrücken notwendige Spannkraft F bei kontinuierlicher Verformung der Spannscheibe 15 in einem ersten Spannschritt S zunächst ansteigt, bis eine planmäßig zu erreichende Vorspannkraft Fv erreicht ist, und dann in einem Verformungsschritt V bis zum Erreichen der Endmontagehöhe h_{E} konstant bleibt oder wieder abfällt, wie dies in Figur 1 zu sehen ist. Bei der dargestellten Spannscheibe 15 beträgt die planmäßig zu erreichende Vorspannkraft 17 Kilonewton, wobei die Höhe der Spannscheibe 15 im Spannschritt S von der Ausgangshöhe ho, die 8 Millimeter beträgt, um circa einen Millimeter auf die Höhe hv zusammengedrückt wird. Im folgenden zweiten Schritt, dem Verformungsschritt V, wird die Höhe h der Spannscheibe 15 um weitere drei Millimeter auf die Endmontagehöhe h_{E} zusammengedrückt, die circa vier Millimeter beträgt, bei der die Endmontagestellung erreicht ist. In der Endmontagestellung ist die Spannscheibe 15 aber noch nicht eben flach gedrückt, sondern immer noch konkav gewölbt.

Die Spannscheibe 15 weist eine dem Schraubenkopf 11 zugewandte Lagerfläche 17 auf, an der sich das Befestigungselement 2 abstützt, in diesem Fall direkt, in dem der Schraubenkopf 11 an der Lagerfläche 17 anliegt. Auf der dem Schraubenkopf 11 und der Lagerfläche 17 abgewandten Seite weist die Spannscheibe 15 eine Widerlagerfläche 18 auf, die in diesem Fall linienförmig als Kreisring an der das Stützelement 6 bildenden Unterlegscheibe anliegt, über die sich die Spannscheibe 15 indirekt am Anbauteil 10 als Lagergrund abstützt. Da die auf die Lagerfläche 17 wirkende Kraft ("Actio") gleich groß wie die über die Widerlagerfläche 18 wirkende Kraft ("Reactio") ist und diese Kräfte gleich groß wie die zur Verformung der Spannscheibe 15 notwendigen Spannkraft F sind, ist die im Befestigungselement wirkende Zugkraft gleich groß wie die Spannkraft F, die auf die Spannscheibe 15 wirkt. Das Befestigungselement 2 und die Spannscheibe 15 sind erfindungsgemäß so aufeinander abgestimmt, dass die planmäßige aufzubringende Spannkraft Fv gleich groß wie die maximale Spannkraft F des ersten Spannschritts S ist. Wenn beim Spannen die Endmontagestellung erreicht wird, in der die Spannscheibe 15 auf die Endmontagehöhe h_{E} zusammengedrückt ist, weiß ein Anwender somit, dass das Befestigungselement 2 mit der planmäßig aufzubringenden Spannkraft Fv angezogen wurde, da diese auch zum Zusammendrücken der Spannscheibe 15 auf die Endmontagehöhe h_{E} notwendig ist.

Bei dem ersten erfindungsgemäßen Spannsystem 1 ist das Abstandselement 5 eine Hülse aus Kunststoff, die einen hohlzylindrischen ersten Grundkörper 19 aufweist, an den sich entgegen der Montagerichtung M ein hohler Kegelstumpf 20 einstückig anschließt. Die als Stützelement 6 wirkende Unterlegscheibe ist in eine korrespondierende Aufnahme des Grundkörpers 19 eingepresst, sodass das Verformungselement 3, das Stützelement 6 und das Abstandselement 5 eine Montageeinheit bilden. Das Abstandselement 5 umgibt das Verformungselement vollständig und weist an seiner dem Stützelement 6 abgewandten Seite einen kreisringförmigen Anschlag 21 auf. An dem Anschlag 21 liegt das Montagewerkzeug 4 beim Spannen an, also beim Drehen der Sechskantschraube 7 um die Längsachse L. Der Anschlag 21 verhindert, dass das Montagewerkzeug 4 beim Spannen axial in die Montagerichtung M zum Anbauteil 10 hinbewegt werden kann, wobei das Montagewerkzeug 4 bereits in der Vormontagestellung (Figur 4) am Anschlag 21 derart anliegt, dass eine axiale Bewegung des Montagewerkzeugs 4 zur Spannscheibe 15 hin nicht mehr möglich ist. Der Abstand a₁ vom Anschlag 21 zur Widerlagerfläche 18 ist in diesem Fall in der Vormontagestellung (Figur 4) gleich wie in der Endmontagestellung (Figur 5). Zudem ist in der Endmontagestellung der axiale Abstand a₁ des Anschlags 21 zur Widerlagerfläche 18 größer, als die Endmontagehöhe h_{E}. Beim Spannen bewegt sich allerdings der Schraubenkopf 11 durch das Zusammendrücken der Spannscheibe 15 in die Montagerichtung M, so dass sich die Schlüsselfläche 13 als Werkzeugsitz 14 aus der Sechskantnuss als Montagewerkzeug 4 heraus bewegt, wodurch sich die drehfeste Verbindung zwischen Werkzeugsitz 14 und Montagewerkzeug 4 löst, sodass beim Erreichen der Endmontagestellung keine drehfeste Verbindung zwischen dem Montagewerkzeug 4 und dem Schraubenkopf 11 als Spannelement 12 mehr besteht. Somit kann durch weiteres Drehen des Montagewerkzeugs 4 um die Längsachse L das Befestigungselement 2 nicht weiter gespannt werden. Ein Überschreiten der planmäßigen Spannkraft Fv und eine daraus möglicherweise resultierende Beschädigung des Befestigungselements 2 ist somit ausgeschlossen.

Da das Abstandselement 5 eine runde Außenform ohne Schlüsselflächen aufweist und der Werkzeugsitz 14 beim Erreichen der Endmontagestellung nicht mehr im Eingriff mit dem Montagewerkzeug 4 steht, verhindert das Abstandselement 5 eine Demontage des Spannsystems 1 beziehungsweise ein Lösen der Sechskantschraube 7. Erst nach einem Entfernen des Abstandselements 5 kann ein Werkzeug am Werkzeugsitz 14 angesetzt und die Sechskantschraube 7 aufgedreht werden.

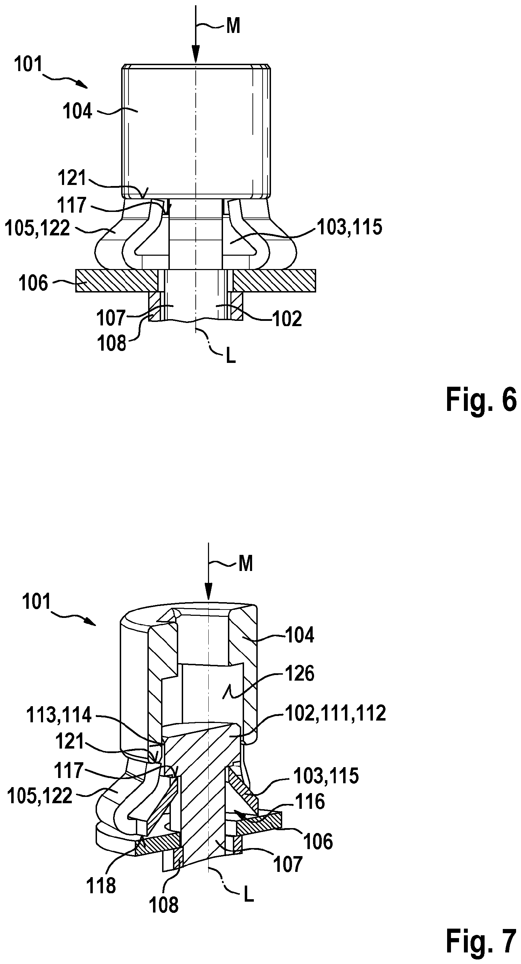

Bei dem in den Figuren 6 bis 9 dargestellten zweiten erfindungsgemäßen Spannsystem 101 besteht das Abstandselement 105 aus sechs einstückig mit dem Verformungselement 103 verbundenen Armen 122, die an ihren der Montagerichtung M abgewandten Enden Anschlagflächen als Anschlag 121 aufweisen. Die in Montagerichtung M vorderen Enden der Abstandselemente 105 bilden die Widerlagerfläche 118 des Verformungselements 103. Das Verformungselement 103 ist hier ebenfalls eine Spannscheibe 115, die hier allerdings als hohler Kegelstumpf ausgebildet ist, aber qualitativ ebenfalls die in Figur 1 dargestellte Lastkurve aufweist. Die Montage des Spannsystems 101 beziehungsweise das Spannen des Befestigungselements 102 erfolgt wie oben für das erste erfindungsgemäße Spannsystem 1 beschrieben. Allerdings liegen in diesem Fall die Arme 122 flächig an den Schlüsselflächen 113 des Schraubenkopfs 111 an, sodass die Spannscheibe 115 beim Drehen der Sechskantschraube 107 mit dem Drehwerkzeug 104 mitdreht. Die als Stützelement 106 wirkende Unterlegscheibe aus Stahl wirkt in diesem Fall zusätzlich als Gleitfläche, auf der die Spannscheibe 115 dreht. In diesem Fall können zur Demontage, also zum Lösen der Sechskantschraube 107, die Außenseiten der Arme 122 als Angriffsflächen für ein Demontagewerkzeug verwendet werden.

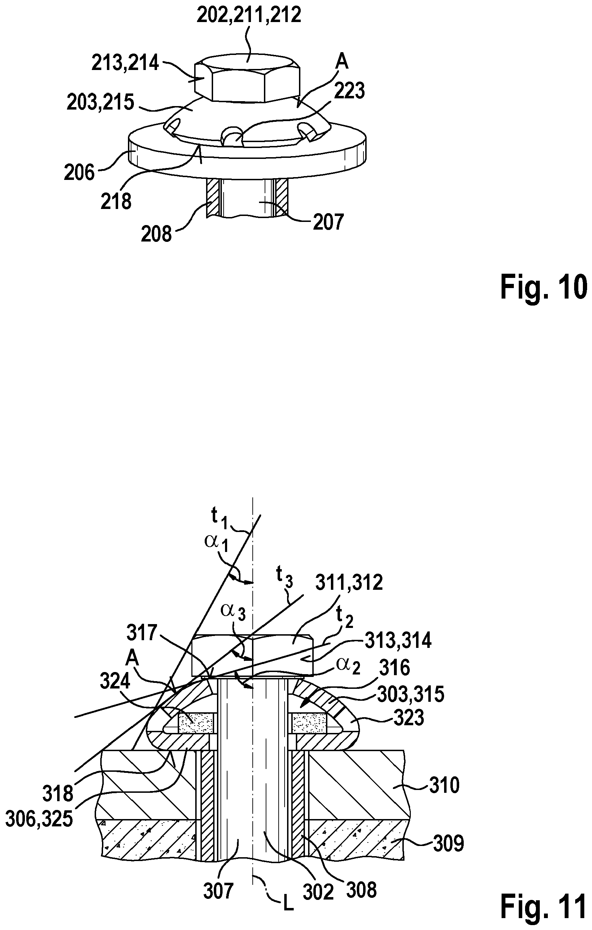

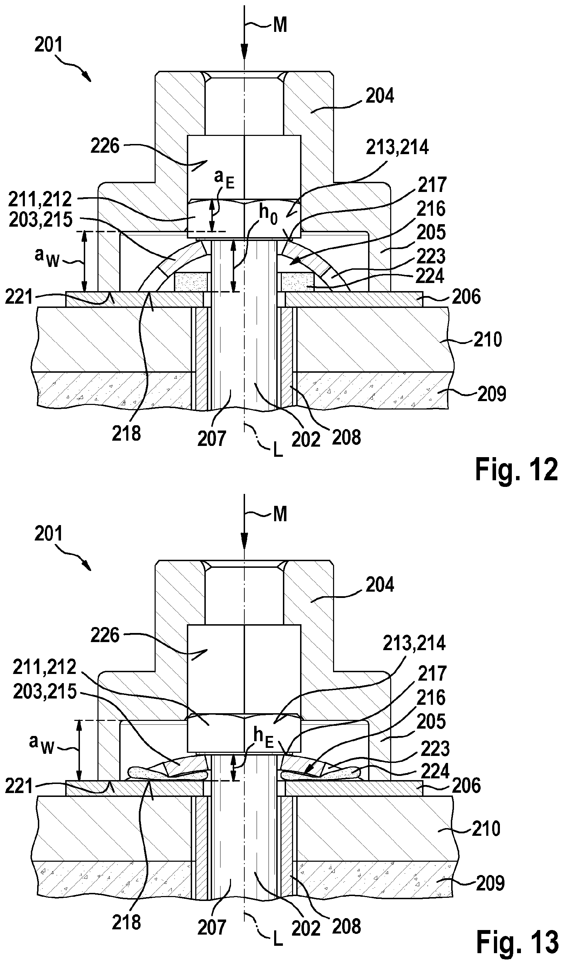

Bei den in den Figuren 10 bis 13 dargestellten dritte und vierte Spannsystemen 201, 301 ist der Anschlag 221 am Montagewerkzeug 204 angeordnet. Die Montage des dritten und des vierten Spannsystems 201, 301 beziehungsweise das Spannen der Befestigungselemente 202, 302 erfolgt wiederum wie oben für das erste erfindungsgemäße Spannsystem 1 beschrieben. Das Montagewerkzeug 204, das in den Figuren 12 und 13 dargestellt ist, ist Bestandteil sowohl des dritten als auch des vierten Spannsystems 201, 301. Wie in den Figuren 12 und 13 zu sehen, ist an dem Montagewerkzeug 204, einer Sechskantnuss, ein Abstandselement 205 einstückig angeformt. Das Abstandselement 205 hat die Form einen Hohlzylinders, dessen Außendurchmesser größer als der Außendurchmesser der Verformungselements 203, 303 in der Endmontagestellung ist, so dass das Abstandelement 205 die Verformung des Verformungselements 203, 303 nicht behindert. Das hohlzylindrische Abstandselement 205 weist zudem einen Innendurchmesser auf, der größer als ein Außendurchmesser des Werkzeugsitzes 214, 314 ist, so dass das Abstandselement 205 auf den Werkzeugsitz 214, 314 beziehungsweise das Spannelement 207, 307 keine Drehbewegung übertragen kann. Der "Außendurchmesser des Werkzeugsitzes 214, 314" ist gleich dem Durchmesser eines Umkreises um den Werkzeugsitz 214, 314, dessen Mittelpunkt auf der Längsachse L liegt und die Längsachse eine Flächennormale zur Kreisfläche des Umkreises ist. Das Abstandselement 205 weist an seinem in Montagerichtung M vorderen Ende einen umlaufenden kreisringförmigen Anschlag 221 auf. Das Abstandselement 205 umgibt während des Spannens des Befestigungselements 202 das Verformungselement 203, 303, das bei den in den Figuren 10 bis 13 dargestellten dritten und vierten erfindungsgemäßen Spannsystemen 201, 301 ebenfalls als Spannscheibe 215, 315 ausgebildet sind, die in ihrer Größe und Ausbildung der Spannscheibe 15 des ersten Spannsystems 1 entsprechen. Die Spannscheiben 215, 315 weisen im Wesentlichen die gleiche Lastkurve der Figur 1 auf, wie die Spannscheibe 15. Allerdings weisen die Spannscheibe 215, 315 Durchbrüche 223, 323 auf, durch die ein Indikatorelement 224, 324 beim Zusammendrücken der Spannscheibe 215, 315 radial zur Längsachse L nach außen verdrängt wird. Das Indikatorelement 224, 324 befindet sich in der unverformten Vormontagestellung (Figuren 11 und 12) vollständig im Hohlraum 216, 316 der Spannscheibe 215, 315. Beim Spannen und dem daraus resultierenden Zusammendrücken der Spannscheibe 215, 315 wird das Indikatorelement 224, 324, ein einfarbiger Silikonring, von der sich verformenden Spannscheibe 215, 216 axial gegen ein Stützelement 206, 306 und radial gegen die Sechskantschraube 207, 307 gedrückt, sodass es nur radial durch die Durchbrüche 223, 323 nach außen ausweichen kann. Dabei ist die Geometrie des Indikatorelements 224, 324 so auf die Verformung der Spannscheibe 215, 216 abgestimmt, dass beim Erreichen der Endmontagehöhe h_{E} das Indikatorelement 224, 324 in den Durchbrüchen 223, 323 sichtbar ist und einem Anwender anzeigt, dass das Befestigungselement 202, 302 planmäßig gespannt worden ist. Wie in den Figuren 12 und 13 zu sehen ist, ist der axiale Abstand aw vom Anschlag 221 zu den Werkzeugflächen 226 des Montagewerkzeugs 204 größer, als die axiale Länge a_{E} des Eingriffs des Werkzeugsitzes 224 in die Werkzeugfläche 226 in der Vormontagestellung. Zudem ist in diesem Fall der axiale Abstand aw größer als die axiale Höhe der Schlüsselflächen 213 des Schraubenkopfs 211.

Im Fall des dritten erfindungsgemäßen Spannsystems 201 (Figuren 10, 12, 13) ist das Stützelement 206 eine Unterlegscheibe, auf der der Anschlag 221 des Montagewerkzeugs 204 beim Spannen aufliegt. Das Stützelement 206 bildet in diesem Fall eine Gegenanschlagfläche für den Anschlags 221 des Montagewerkzeugs 204 beziehungsweise einen zweiten Anschlag. Dagegen wird das Stützelement 306 des vierten erfindungsgemäßen Spannsystems 301 (Figur 11, ohne Montagewerkzeug 204 dargestellt) durch radial nach innen gebogene, einstückig mit der Spannscheibe 315 verbundenen Laschen 325 gebildet, auf denen sich die Spannscheibe 315 gegen das Anbauteil 310 abstützt. Zum Spannen des vierten erfindungsgemäßen Spannsystems 301 wird das vom dritten erfindungsgemäßen Spannsystem 201 bekannte Montagewerkzeug 204 verwendet, das in diesem Fall mit seinem Anschlag 221 direkt am Anbauteil 310 anliegt.

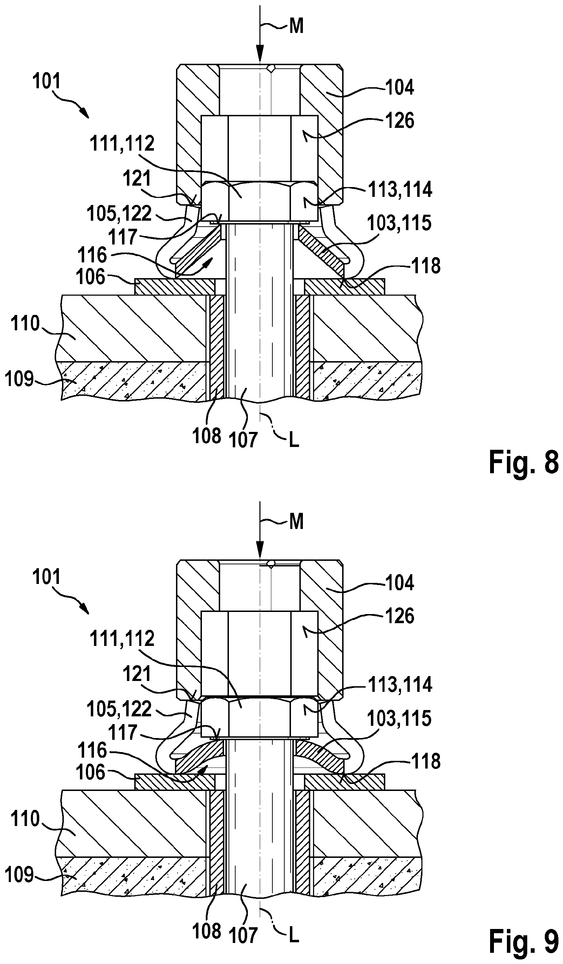

Die Spannscheiben 15, 215, 315 des ersten, dritten und vierten Spannsystems 1, 201, 301 weisen alle die gleiche gewölbte Form auf, die rotationssymmetrisch zur Längsachse L ist. In Figur 11 sind Tangenten t₁, t₂, t₃ an die Mantelfläche A der dargestellten Spannscheibe 315 des vierten Spannsystems 301 eingezeichnet, um die Gestalt der Wölbung zu veranschaulichen. Die Mantelfläche A weist keinen über ihre Höhe einheitliche Kegelwinkel auf, wie dies bei der Spannscheibe 115 des zweiten erfindungsgemäßen Spannsystems 101 in der in Figur 8 dargestellten unverformten Vormontagestellung der Fall ist. Die Mantelfläche A der gewölbten Spannscheiben 15, 215, 315 ist in der unverformten Vormontagestellung in einem ersten, der Widerlagerfläche 18, 218, 318 benachbarten Bereich steiler, als in einem der Lagerfläche 17, 217, 317 benachbarten zweiten Bereich der Mantelfläche. Anders ausgedrückt schließt eine erste Tangente t₁, die im ersten Bereich an der Mantelfläche anliegt, mit der Längsachse Leinen kleineren Winkel α₁ ein, als eine zweite Tangente t₂, die an der Mantelfläche im zweiten Bereich anliegt. Eine an einem radial zwischen dem ersten und dem zweiten Bereich liegenden dritten Bereich anliegende dritte Tangente t₃ schließt einen Winkel α₃ mit der Längsachse L ein, der größer als der erste Winkel α₁ der ersten Tangente t₁ und kleiner als der zweite Winkel α₂ der zweiten Tangente t₂ ist.

### Bezugszeichenliste

- 1, 101, 201, 301: Spannsystem
- 2, 102, 202, 302: Befestigungselement
- 3, 103, 203, 303: Verformungselement
- 4, 104, 204: Montagewerkzeug
- 5, 105, 205, 305: Abstandselement
- 6, 106, 206, 306: Stützelement
- 7, 107, 207, 307: Sechskantschraube
- 8, 108, 208, 308: Spreizhülse
- 9, 109, 209, 309: Bauteil
- 10, 110, 210, 310: Anbauteil
- 11, 111, 211, 311: Schraubenkopf
- 12, 112, 212, 312: Spannelement
- 13, 113, 213, 313: Schlüsselfläche
- 14, 114, 214, 314: Werkzeugsitz
- 15, 115, 215, 315: Spannscheibe
- 16, 116, 216, 316: Hohlraum
- 17, 117, 217, 317: Lagerfläche
- 18, 118, 218, 318: Widerlagerfläche
- 19: Grundkörper des Abstandselements 1
- 20: Kegelstumpf des Abstandselements 1
- 21, 121, 221: Anschlag
- 122: Arm
- 223, 323: Durchbruch
- 224,324: Indikatorelement
- 325: Lasche
- 26, 126, 226: Werkzeugfläche
- A: Mantelfläche der Spannscheiben 15, 215, 315
- a₁: axialer Abstand des Anschlags 21, 121, 221, 321 zur Widerlagerfläche 18, 118, 218, 318
- a_{E}: axiale Länge des Eingriffs des Werkzeugsitzes 14, 114, 214, 314 in die Werkzeugflächen 26, 126, 226 in der Vormontagestellung
- aw: axialer Abstand des Anschlags 221, 321 zu den Werkzeugflächen 226 des Montagewerkzeugs 204
- L: Längsachse
- M: Montagerichtung
- t₁, t₂, t₃: Tangenten an die Mantelfläche der gewölbten Spannscheibe 15, 215, 315
- α₁, α₂, α₃: Schnittwinkel der Tangenten t₁, t₂, t₃ mit der Längsachse L
- F: Spannkraft
- Fv: planmäßige Spannkraft
- d_{F}: Abnahme der Spannkraft
- S: Spannschritt
- V: Verformungsschritt
- Ü: Überlastschritt
- h: Höhe des Verformungselements 3, 103, 203, 303
- h₀: Ausgangshöhe des Verformungselements 3, 103, 203, 303 in der unverformten Vormontagestellung
- h_{V}: Höhe des Verformungselements 3, 103, 203, 303 beim Erreichen der planmäßigen Spannkraft Fv
- h_{E}: Endmontagehöhe des Verformungselements 3, 103, 203, 303 in der Endmontagestellung
- Δh: Verformungsweg des Verformungselements 3, 103, 203, 303 zwischen der Vormontagestellung und der Endmontagestellung

## Patentansprüche

1. Spannsystem (1, 101, 201, 301) zum Spannen eines Befestigungselements (2, 102, 202, 302),
wobei das Spannsystem (1, 101, 201, 301) das Befestigungselement (2, 102, 202, 302), ein Verformungselement (3, 103, 203, 303) und ein Montagewerkzeug (4, 104, 204) umfasst,
wobei das Befestigungselement (2, 102, 202, 302) ein Spannelement (12, 112, 212, 312) mit einem Werkzeugsitz (14, 114, 214, 314) zum drehfesten Verbinden mit dem Montagewerkzeug (4, 104, 204) aufweist, insbesondere eine Mutter oder einen Schraubenkopf mit Schlüsselflächen, so dass das Spannelement (12, 112, 212, 312) zum Spannen des Befestigungselements (2, 102, 202, 302) mit dem Montagewerkzeug (4, 104, 204) um eine Längsachse (L) des Befestigungselements (2, 102, 202, 302) gedreht und dabei das Verformungselement (3, 103, 203, 303) unter Wirkung einer Spannkraft (F) von einer Ausgangshöhe (h₀) in einer unverformten Vormontagestellung auf eine Endmontagehöhe (hε) in einer Endmontagestellung zusammengedrückt werden kann,
**dadurch gekennzeichnet,**
**dass** das Spannsystem (1, 101, 201, 301) einen Anschlag (21, 121, 221) aufweist, an oder mit dem das Montagewerkzeug (4, 104, 204) beim Spannen derart anliegt, dass der Anschlag (21, 121, 221) eine axiale Bewegung des Montagewerkzeugs (4, 104, 204) begrenzt, und dass sich das Spannelement (12, 112, 212, 312) beim Zusammendrücken des Verformungselements (3, 103, 203, 303) auf die Endmontagehöhe (hε) mit seinem Werkzeugsitz (14, 114, 214, 314) aus der drehfesten Verbindung mit dem Montagewerkzeug (4, 104, 204) löst, so dass beim Erreichen der Endmontagestellung keine drehfeste Verbindung zwischen dem Montagewerkzeug (4, 104, 204) und dem Spannelement (12, 112, 212, 312) mehr besteht.

2. Spannsystem nach Anspruch 1, **dadurch gekennzeichnet, dass** das Montagewerkzeug (4, 104, 204) bereits in der Vormontagestellung am oder mit dem Anschlag (21, 121, 221) derart anliegt, dass eine axiale Bewegung des Montagewerkzeugs (4, 104, 204) zum Verformungselement (3, 103, 203, 303) hin nicht mehr möglich ist.

3. Spannsystem nach einem der vorstehenden Ansprüche, **dadurch gekennzeichnet, dass** das Verformungselement (3, 103, 203, 303) eine dem Spannelement (12, 112, 212, 312) zugewandte Lagerfläche (17, 117, 217, 317), an der sich das Befestigungselement (2, 102, 202, 302) abstützt, und eine dem Spannelement (12, 112, 212, 312) abgewandte Widerlagerfläche (18, 118, 218, 318) zur Abstützung an einem Lagergrund aufweist.

4. Spannsystem nach Anspruch 3, **dadurch gekennzeichnet, dass** der Abstand (a₁) des Anschlags (21, 121, 221) zu der dem Spannelement (12, 112, 212, 312) abgewandten Widerlagerfläche (18, 118, 218, 318), mit der sich das Verformungselement (3, 103, 203, 303) an dem Lagergrund abstützt, in der Vormontagestellung gleich ist, wie in der Endmontagestellung.

5. Spannsystem nach Anspruch 3 oder Anspruch 4, **dadurch gekennzeichnet, dass** in der Endmontagestellung der axiale Abstand (a₁) des Anschlags (21, 121, 221) zur Widerlagerfläche (18, 118, 218, 318) größer ist, als die Endmontagehöhe (h_{E}).

6. Spannsystem nach einem der vorstehenden Ansprüche, **dadurch gekennzeichnet, dass** der Anschlag (21, 121, 221) an einem Abstandselement (5, 105, 205, 305) ausgebildet ist, welches das Verformungselement (3, 103, 203, 303) umgibt.

7. Spannsystem nach Anspruch 6, **dadurch gekennzeichnet, dass** das Befestigungselement (102) und das Abstandselement (105) drehfest verbunden sind.

8. Spannsystem nach einem der Ansprüche 6 oder 7, **dadurch gekennzeichnet, dass** das Abstandselement 5, 105) mit dem Verformungselement (3, 103) verbunden ist, insbesondere einstückig.

9. Spannsystem nach einem der vorstehenden Ansprüche, **dadurch gekennzeichnet, dass** das Spannsystem (1, 101, 201, 301) ein Stützelement (6, 106, 206, 306) aufweist, auf dem sich das Verformungselement (3, 103, 203, 303) abstützt.

10. Spannsystem nach einem der Ansprüche 1 bis 9, **dadurch gekennzeichnet, dass** das Montagewerkzeug (204) den Anschlag (221) aufweist.

11. Spannsystem gemäß den Ansprüchen 6 und 10, **dadurch gekennzeichnet, dass** das Montagewerkzeug (204) das Abstandselement (205) aufweist, an dessen in Aufsteckrichtung vorderen Ende der Anschlag (221) angeordnet ist, und dass der axiale Abstand (aw) vom Anschlag (221) zu den Werkzeugflächen (226) des Montagewerkzeugs (204) größer ist als die axiale Länge (a_{E}) des Eingriffs des Werkzeugsitzes (214, 314) in die Werkzeugflächen (226) in der Vormontagestellung.

12. Spannsystem nach einem der vorstehenden Ansprüche, **dadurch gekennzeichnet, dass** das Verformungselement (3, 103, 203, 303) eine kegelstumpfförmige und/oder gewölbte Spannscheibe (15, 115, 215, 315) ist, die ausgehend von der Ausgangshöhe (h₀) auf die Endmontagehöhe (hε) derart zusammendrückbar ist, dass die zum Zusammendrücken notwendige Spannkraft (F) bei kontinuierlicher Verformung der Spannscheibe (15, 115, 215, 315) zunächst ansteigt, und dann bis zum Erreichen der Endmontagehöhe (hε) konstant bleibt oder wieder abfällt.

13. Verfahren zum Vorspannen eines Befestigungselements (2, 102, 202, 302) unter Verwendung eines Spannsystems (1, 101, 201, 301), insbesondere unter Verwendung eines Spannsystem (1, 101, 201, 301) nach einem der Ansprüche 1 bis 12,
wobei das Spannsystem (1, 101, 201, 301) das Befestigungselement (2, 102, 202, 302) ein Verformungselement (3, 103, 203, 303) und ein Montagewerkzeug (4, 104, 204) umfasst,
wobei das Verformungselement (3, 103, 203, 303) durch Aufbringen einer Spannkraft (F) mit dem Montagewerkzeug (4, 104, 204) auf das Befestigungselement (2, 102, 202, 302) von einer Ausgangshöhe (h₀) in einer unverformten Vormontagestellung auf eine Endmontagehöhe (hε) in einer Endmontagestellung zusammengedrückt wird,
wobei die zum Zusammendrücken des Verformungselements (3, 103, 203, 303) notwendige Spannkraft (F) zunächst in einem ersten Spannschritt (S) des Spannvorgangs bis zu einem Maximalwert ansteigt und dann in einem sich anschließenden Verformungsschritt (V) des Spannvorgangs bis zum Erreichen der Endmontagehöhe (hε) nicht weiter zunimmt, insbesondere konstant bleibt oder wieder abfällt, wobei das Verformungselement (3, 103, 203, 303) eine Spannscheibe (15, 115, 215, 315) ist, die in der Vormontagestellung konisch und/oder kegelförmig gewölbt ist, **dadurch gekennzeichnet, dass** die Spannscheibe (15, 115, 215, 315) in der Endmontagestellung nicht flächig eben gedrückt ist, so dass die Spannscheibe (15, 115, 215, 315) in einem Überlastschritt weiter zusammengedrückt und ihre Höhe (h) weiter verringert werden kann.

## Claims

1. Tensioning system (1, 101, 201, 301) for tensioning a fixing element (2, 102, 202, 302),
wherein the tensioning system (1, 101, 201, 301) comprises the fixing element (2, 102, 202, 302), a deformation element (3, 103, 203, 303) and a mounting tool (4, 104, 204),
wherein the fixing element (2, 102, 202, 302) has a tensioning element (12, 112, 212, 312) having a tool seat (14, 114, 214, 314) for connection to the mounting tool (4, 104, 204) for conjoint rotation therewith, especially a nut or a screw head having flats, so that for tensioning of the fixing element (2, 102, 202, 302) the tensioning element (12, 112, 212, 312) can be rotated with the mounting tool (4, 104, 204) about a longitudinal axis (L) of the fixing element (2, 102, 202, 302) and at the same time the deformation element (3, 103, 203, 303) can be compressed under the action of a tensioning force (F) from a starting height (h₀) in an undeformed pre-mounting position to a final mounted height (h_{E}) in a final mounted position,
**characterised in that**
the tensioning system (1, 101, 201, 301) has a stop (21, 121, 221) against which or with which the mounting tool (4, 104, 204) bears during tensioning in such a way that the stop (21, 121, 221) limits axial movement of the mounting tool (4, 104, 204); and during the compression of the deformation element (3, 103, 203, 303) to the final mounted height (h_{E}), the tensioning element (12, 112, 212, 312) is released by its tool seat (14, 114, 214, 314) from its conjointly rotating connection with the mounting tool (4, 104, 204) so that, once the final mounted position has been reached, the mounting tool (4, 104, 204) and the tensioning element (12, 112, 212, 312) are no longer connected for conjoint rotation.

2. Tensioning system according to claim 1, **characterised in that** in the pre-mounting position the mounting tool (4, 104, 204) already bears against or with the stop (21, 121, 221) in such a way that axial movement of the mounting tool (4, 104, 204) towards the deformation element (3, 103, 203, 303) is no longer possible.

3. Tensioning system according to either one of the preceding claims, **characterised in that** the deformation element (3, 103, 203, 303) has a bearing surface (17, 117, 217, 317), which faces towards the tensioning element (12, 112, 212, 312) and against which the fixing element (2, 102, 202, 302) is supported, and a counter-bearing surface (18, 118, 218, 318), which faces away from the tensioning element (12, 112, 212, 312), for support against a supporting substrate.

4. Tensioning system according to claim 3, **characterised in that** the distance (a₁) of the stop (21, 121, 221) from the counter-bearing surface (18, 118, 218, 318), which faces away from the tensioning element (12, 112, 212, 312) and with which the deformation element (3, 103, 203, 303) is supported against the supporting substrate, is the same in the pre-mounting position as in the final mounted position.

5. Tensioning system according to claim 3 or claim 4, **characterised in that** in the final mounted position the axial distance (a₁) of the stop (21, 121, 221) from the counter-bearing surface (18, 118, 218, 318) is greater than the final mounted height (h_{E}).

6. Tensioning system according any one of the preceding claims, **characterised in that** the stop (21, 121, 221) is formed on a spacer element (5, 105, 205, 305) which surrounds the deformation element (3, 103, 203, 303).

7. Tensioning system according to claim 6, **characterised in that** the fixing element (102) and the spacer element (105) are connected for conjoint rotation.

8. Tensioning system according to either one of claims 6 and 7, **characterised in that** the spacer element (5, 105) is connected, especially integrally, to the deformation element (3, 103).

9. Tensioning system according to any one of the preceding claims, **characterised in that** the tensioning system (1, 101, 201, 301) has a support element (6, 106, 206, 306) on which the deformation element (3, 103, 203, 303) is supported.

10. Tensioning system according to any one of claims 1 to 9, **characterised in that** the mounting tool (204) has the stop (221).

11. Tensioning system according to claims 6 and 10, **characterised in that** the mounting tool (204) has the spacer element (205), on the front end of which in the insertion direction the stop (221) is arranged; and the axial distance (aw) from the stop (221) to the tool faces (226) of the mounting tool (204) is greater than the axial length (a_{E}) of the engagement of the tool seat (214, 314) in the tool faces (26) in the pre-mounting position.

12. Tensioning system according to any one of the preceding claims, **characterised in that** the deformation element (3, 103, 203, 303) is a frustoconical and/or domed spring washer (15, 115, 215, 315) which, starting from the starting height (h₀), is compressible to the final mounted height (h_{E}) in such a way that the tensioning force (F) necessary for compression initially increases, with the spring washer (15, 115, 215, 315) being continuously deformed, and then remains constant or falls again until the final mounted height (h_{E}) has been reached.

13. Method for pretensioning a fixing element (2, 102, 202, 302) using a tensioning system (1, 101, 201, 301), especially using a tensioning system (1, 101, 201, 301) according to any one of claims 1 to 12,
wherein the tensioning system (1, 101, 201, 301) comprises the fixing element (2, 102, 202, 302), a deformation element (3, 103, 203, 303) and a mounting tool (4, 104, 204),
wherein, by application of a tensioning force (F) to the fixing element (2, 102, 202, 302) with the mounting tool (4, 104, 204), the deformation element (3, 103, 203, 303) is compressed from a starting height (h₀) in an undeformed pre-mounting position to a final mounted height (h_{E}) in a final mounted position,
wherein, in a first tensioning step (S) of the tensioning operation, the tensioning force (F) necessary for compression of the deformation element (3, 103, 203, 303) initially increases to a maximum value and then, in a subsequent deformation step (V) of the tensioning operation, does not increase further, and especially remains constant or falls again, until the final mounted height (h_{E}) has been reached, the deformation element (3, 103, 203, 303) being a spring washer (15, 115, 215, 315) which is conical and/or conically domed in the pre-mounting position, **characterised in that** in the final mounted position the spring washer (15, 115, 215, 315) has not been pressed completely flat, so that in an overload step the spring washer (15, 115, 215, 315) can be compressed further and its height (h) further reduced.

## Revendications

1. Système de serrage (1, 101, 201, 301) conçu pour serrer un élément de fixation (2, 102, 202, 302),
ledit système de serrage (1, 101, 201, 301) incluant ledit élément de fixation (2, 102, 202, 302), un élément déformable (3, 103, 203, 303) et un outil de montage (4, 104, 204),
ledit élément de fixation (2, 102, 202, 302) comportant un élément de serrage (12, 112, 212, 312) muni d'un siège (14, 114, 214, 314) d'outil affecté à la liaison à verrouillage rotatif avec l'outil de montage (4, 104, 204), en particulier un écrou ou une tête de vis pourvue de surfaces d'engagement d'une clé, de telle sorte que ledit élément de serrage (12, 112, 212, 312) puisse être animé d'une rotation autour d'un axe longitudinal (L) de l'élément de fixation (2, 102, 202, 302), à l'aide de l'outil de montage (4, 104, 204), en vue de serrer ledit élément de fixation (2, 102, 202, 302), et que l'élément déformable (3, 103, 203, 303) puisse alors être comprimé, sous l'effet d'une force de serrage (F), pour passer d'une hauteur initiale (h₀), dans une position non déformée de montage préalable, à une hauteur (h_{E}) de montage définitif dans une position de montage définitif, **caractérisé par le fait**
**que** ledit système de serrage (1, 101, 201, 301) est doté d'une butée (21, 121, 221) contre laquelle, ou avec laquelle l'outil de montage (4, 104, 204) est en applique, au cours du serrage, de façon telle que ladite butée (21, 121, 221) limite un mouvement axial dudit outil de montage (4, 104, 204) ; et par le fait que, lors de la compression de l'élément déformable (3, 103, 203, 303) jusqu'à la hauteur (h_{E}) de montage définitif, l'élément de serrage (12, 112, 212, 312) se libère, par son siège (14, 114, 214, 314) d'outil, de la liaison à verrouillage rotatif avec l'outil de montage (4, 104, 204), si bien que plus aucune liaison à verrouillage rotatif ne subsiste, entre ledit outil de montage (4, 104, 204) et ledit élément de serrage (12, 112, 212, 312), à l'instant auquel la position de montage définitif est atteinte.

2. Système de serrage selon la revendication 1, **caractérisé par le fait que** l'outil de montage (4, 104, 204) est en applique contre, ou avec la butée (21, 121, 221), dès la position de montage préalable, de telle sorte qu'un mouvement axial dudit outil de montage (4, 104, 204) en direction de l'élément déformable (3, 103, 203, 303) ne soit plus possible.

3. Système de serrage selon l'une des revendications précédentes, **caractérisé par le fait que** l'élément déformable (3, 103, 203, 303) est pourvu d'une surface de support (17, 117, 217, 317) qui pointe vers l'élément de serrage (12, 112, 212, 312) et contre laquelle l'élément de fixation (2, 102, 202, 302) est en appui, et d'une surface de contre-butée (18, 118, 218, 318) qui pointe à l'opposé dudit élément de serrage (12, 112, 212, 312), et est dévolue à l'appui contre une base de support.

4. Système de serrage selon la revendication 3, **caractérisé par le fait que** la distance (a₁), entre la butée (21, 121, 221) et la surface de contre-butée (18, 118, 218, 318) qui pointe à l'opposé de l'élément de serrage (12, 112, 212, 312) et par laquelle l'élément déformable (3, 103, 203, 303) prend appui contre la base de support, est identique tant dans la position de montage préalable, que dans la position de montage définitif.

5. Système de serrage selon la revendication 3 ou la revendication 4, **caractérisé par le fait que** la distance axiale (a₁), entre la butée (21, 121, 221) et la surface de contre-butée (18, 118, 218, 318), est supérieure à la hauteur (h_{E}) de montage définitif dans la position de montage définitif.

6. Système de serrage selon l'une des revendications précédentes, **caractérisé par le fait que** la butée (21, 121, 221) est ménagée sur un élément d'espacement (5, 105, 205, 305) entourant l'élément déformable (3, 103, 203, 303).

7. Système de serrage selon la revendication 6, **caractérisé par le fait que** l'élément de fixation (102) et l'élément d'espacement (105) sont reliés avec verrouillage rotatif.

8. Système de serrage selon l'une des revendications 6 ou 7, **caractérisé par le fait que** l'élément d'espacement (5, 105) est relié à l'élément déformable (3, 103), en particulier d'un seul tenant.

9. Système de serrage selon l'une des revendications précédentes, **caractérisé par le fait que** ledit système de serrage (1, 101, 201, 301) est nanti d'un élément d'appui (6, 106, 206, 306) sur lequel l'élément déformable (3, 103, 203, 303) prend appui.

10. Système de serrage selon l'une des revendications 1 à 9, **caractérisé par le fait que** l'outil de montage (204) est muni de la butée (221).

11. Système de serrage selon les revendications 6 et 10, **caractérisé par le fait que** l'outil de montage (204) est doté de l'élément d'espacement (205), la butée (221) étant disposée à l'extrémité dudit élément qui est située à l'avant dans la direction d'emboîtement ; et **par le fait que** la distance axiale (aw) entre ladite butée (221) et les surfaces (226) dudit outil de montage (204) est supérieure, dans la position de montage préalable, à la longueur axiale (a_{E}) de pénétration du siège (214, 314) d'outil dans lesdites surfaces (226) de l'outil.

12. Système de serrage selon l'une des revendications précédentes, **caractérisé par le fait que** l'élément déformable (3, 103, 203, 303) est une rondelle de serrage (15, 115, 215, 315) tronconique et/ou bombée, qui peut être comprimée pour passer de la hauteur initiale (h₀) à la hauteur (h_{E}) de montage définitif, de façon telle que la force de serrage (F) nécessaire à la compression croisse dans un premier temps, lors d'une déformation continue de ladite rondelle de serrage (15, 115, 215, 315), puis demeure constante ou décroisse à nouveau jusqu'à ce que ladite hauteur (h_{E}) de montage définitif soit atteinte.

13. Procédé de précontrainte d'un élément de fixation (2, 102, 202, 302) avec utilisation d'un système de serrage (1, 101, 201, 301), notamment en utilisant un système de serrage (1, 101, 201, 301) conforme à l'une des revendications 1 à 12,
ledit système de serrage (1, 101, 201, 301) incluant ledit élément de fixation (2, 102, 202, 302), un élément déformable (3, 103, 203, 303) et un outil de montage (4, 104, 204),
ledit élément déformable (3, 103, 203, 303) étant comprimé, par application d'une force de serrage (F) audit élément de fixation (2, 102, 202, 302) à l'aide dudit outil de montage (4, 104, 204), pour passer d'une hauteur initiale (h₀), dans une position non déformée de montage préalable, à une hauteur (h_{E}) de montage définitif dans une position de montage définitif,
sachant que, lors d'une première étape de serrage (S) du processus de serrage, ladite force de serrage (F) nécessaire à la compression de l'élément déformable (3, 103, 203, 303) croît dans un premier temps, jusqu'à une valeur maximale, puis n'augmente pas davantage et demeure notamment constante ou décroît à nouveau, lors d'une étape consécutive de déformation (V) dudit processus de serrage, jusqu'à ce que ladite hauteur (h_{E}) de montage définitif soit atteinte, ledit élément déformable (3, 103, 203, 303) étant une rondelle de serrage (15, 115, 215, 315) à bombement conique et/ou tronconique dans ladite position de montage préalable, **caractérisé par le fait que** la rondelle de serrage (15, 115, 215, 315) n'est pas aplatie par compression dans la position de montage définitif, si bien que, lors d'une étape de surcharge, ladite rondelle de serrage (15, 115, 215, 315) peut être comprimée davantage, et sa hauteur (h) peut être diminuée davantage.
